# EUROPÄISCHE PATENTSCHRIFT

(11) **EP 0 610 814 B1**
(45) Veröffentlichungstag und Bekanntmachung des Hinweises auf die Patenterteilung: **02.06.1999**
(21) Anmeldenummer: 94101638.8
(22) Anmeldetag: 03.02.1994
(51) Int. Cl.: C08J 5/18, C08L 45/00

(54) **Teilkristalline Cycloolefin-Copolymer-Folie**
Semi-crystalline sheet of cyclo-olefin copolymer
Feuille semi-cristalline de copolymère cyclo-oléfine

(30) Priorität: 12.02.1993 DE 4304310
(43) Veröffentlichungstag der Anmeldung: 17.08.1994
(73) Patentinhaber: Ticona GmbH, 65451 Kelsterbach (DE)
(72) Erfinder: Bennett, Cynthia, D-55232 Alzey (DE); Brekner, Michael-Joachim, D-60529 Frankfurt (DE); Coutandin, Jochen, Dr., D-55450 Langenlonsheim (DE); Herrmann, Schönherr, Otto, D-64625 Bensheim (DE); Osan, Frank, D-65779 Kelkheim (DE)

(56) Entgegenhaltungen:
- EP-A- 0 310 394
- EP-A- 0 503 422
- EP-A- 0 566 988

## Beschreibung

Die Erfindung betrifft teilkristalline Folien aus Cycloolefincopolymeren, ein Verfahren zur Herstellung solcher Folien sowie deren Verwendung.

Cycloolefincopolymere weisen folgende, speziell für Folien vorteilhafte Eigenschaften auf:
- hohe Transparenz (für optische Anwendungen)
- gute dielektrische Eigenschaften (als Kondensatordielektrikum)
- gute Lösungsmittelbeständigkeit gegenüber protisch polaren Lösungsmitteln wie Wasser, Aceton, Alkoholen oder Dimethylformamid sowie gegenüber wässrigen Säuren und Laugen
- hohe Erweichungstemperaturen, insbesondere bei hohem Cycloolefingehalt (für Hochtemperaturanwendungen) und
- gute Gasbarriere (für Anwendungen auf dem Verpackungssektor).

Folien aus amorphen Cycloolefincopolymeren sind bekannt. Die DD-A 224 538 und DD-A 241 971 beschreiben Gießfolien aus Ethylen-Norbornen-Copolymeren.

Die EP-A 0 384 694 beschreibt ebenfalls Folien aus zyklischen Copolymeren. Bis auf wenige Ausnahmen sind die dort erwähnten cycloolefinischen Ausgangsmaterialien jedoch alle amorph.

Ein gravierender Nachteil bei allen bisher bekannten Folien aus amorphen Cycloolefincopolymeren ist die viel zu geringe Lösungsmittelbeständigkeit gegenüber aprotisch, unpolaren Lösungsmitteln wie aliphatische oder aromatische Kohlenwasserstoffe, die diese Folien von vielen Anwendungsbereichen ausschließt.

Die EP-A 384 694 offenbart jedoch auch teilkristalline Cycloolefincopolymere mit einem Kristallinitätsgrad von 0 bis 10 %, die gleichzeitig eine Glastemperatur von 50 bis 230 °C besitzen sollen. Eigene Versuche haben jedoch ergeben, daß bei Verwendung der Katalysatoren gemäß EP-A-0 384 694 außer den amorphen Cycloolefincopolymeren als Nebenreaktion Polyethylen-Anteile entstehen, die teilkristallin sind, so daß das amorphe Cycloolefincopolymer mit Polyethylen-Anteilen versetzt, insgesamt als teilkristallin erscheint. Die Teilkristallinität ist jedoch meist derart gering, daß kein Schmelzpunkt in der DSC-Meßkurve beobachtet werden kann. Weiterhin wurde festgestellt, daß der Schmelzpunkt der in der EP-A 384 694 als teilkristallin beschriebenen Cycloolefincopolymere unter 135 °C liegt, was für Ethylen-Sequenzen typisch ist. Tatsächlich teilkristalline Cycloolefincopolymere sind demnach in der EP-A 384 694 nicht beschrieben.

Die Aufgabe bestand nun darin, eine Cycloolefincopolymer-Folie zur Verfügung zu stellen, die die oben genannten Nachteile von Folien aus amorphen Cycloolefincopolymeren nicht aufweist. Insbesondere bestand die Aufgabe darin, Cycloolefincopolymerfolien mit einer hohen Chemikalienbeständigkeit, verbesserter Dimensionsstabilität, erhöhtem Zug-E-Modul und besserer Verstreckbarkeit zur Verfügung stellen.

Es wurde gefunden, daß mit teilkristallinen Cycloolefincopolymer-Folien die Aufgabe gelöst werden kann. Teilkristalline Cycloolefincopolymere werden mit Hilfe von ausgewählten Metallocen-Katalysatoren, wie sie in der EP-A-0 503 422 beschrieben sind, hergestellt. Bei einer Verarbeitung über die Schmelze erwiesen sich diese Produkte als thermisch wenig stabil. Dies äußerte sich in einer Braunfärbung des Polymers. An dünnen Preßplatten zeigten sich deutlich Gelpartikel (Stippen), die durch eine lokale Vernetzung des Polymers entstanden sein dürften. Außerdem wurde eine Trübung festgestellt, die auf Katalysatorreste zurückgeführt werden können und welche die Transparenz des Produktes mindert. Versuche, aus solchen Polymeren Folien herzustellen, insbesondere Streckversuche verliefen unbefriedigend, da die Folien um die Stippen aufrissen. Es wurde festgestellt, daß sich diese Cycloolefincopolymere erst dann zur Herstellung von Folien mit den geforderten Eigenschaften eignen, wenn der Gehalt an Katalysatorresten, insbesondere den Aluminiumhaltigen, < 100 ppm ist.

Die Glastemperaturen T_{g} der Folien liegen über 100 °C und die Schmelzpunkte Tₘ über 200 °C. Die transparenten Folien lassen sich gut tiefziehen.

Das zur Herstellung der erfindungsgemäßen Folien benötigte Cycloolefincopolymer wird durch Polymerisation von 0,1 bis 99,9 Gew.-%, bezogen auf die Gesamtmenge der Monomeren, mindestens eines Monomers der Formeln I, II, III, IV, V, VI, VII, VIII oder IX 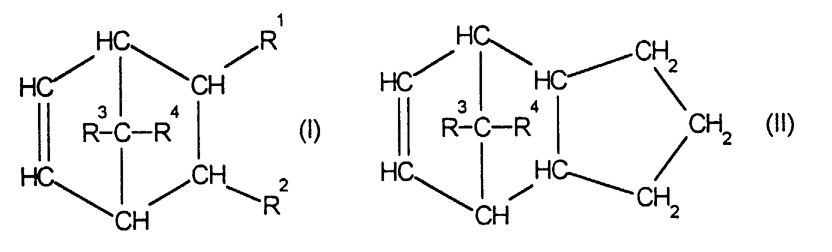 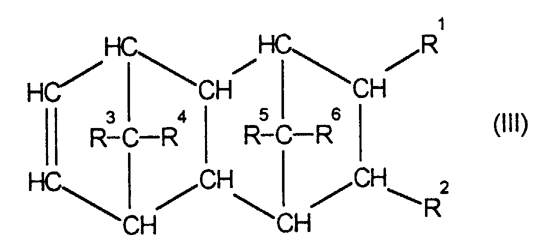 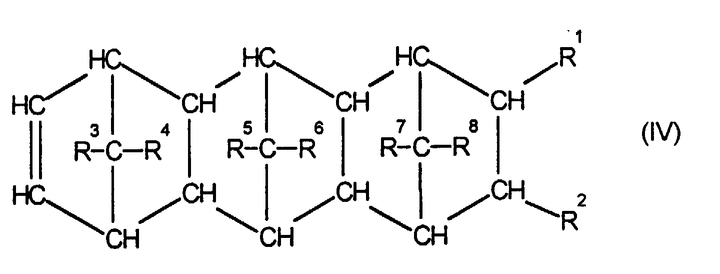 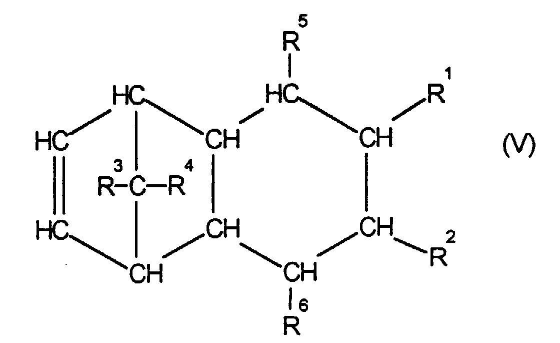 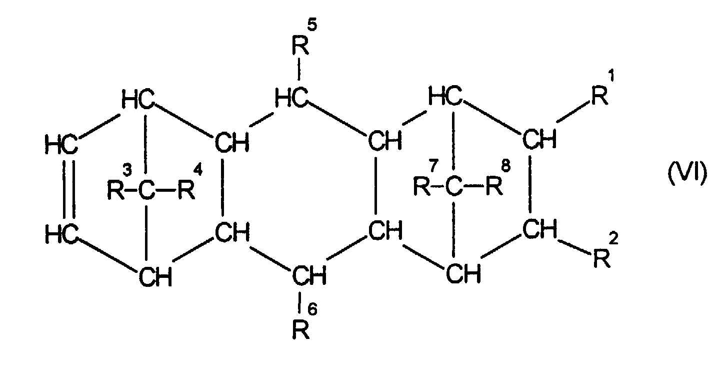 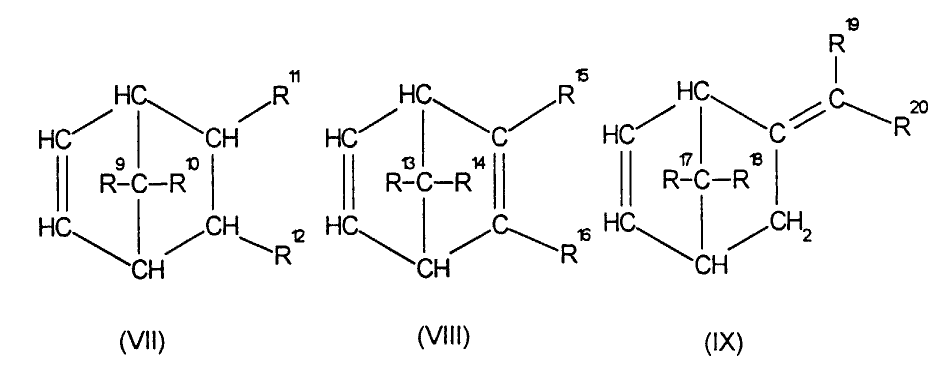 worin
- R¹ bis R⁸: gleich oder verschieden sind und ein Wasserstoffatom, einen C₆-C₁₆-Aryl- oder einen C₁-C₈-Alkylrest bedeuten, wobei gleiche Reste in den verschiedenen Formeln die gleiche oder eine unterschiedliche Bedeutung haben und worin
- R⁹ bis R²⁰: gleich oder verschieden sind und einen C₁-C₁₆-Alkyl-, C₂-C₁₆-Alkenyl oder C₆-C₁₆-Aryl-Rest bedeuten oder wobei die Restepaare R⁹/R¹⁰, R¹¹/R¹², R¹³/R¹⁴, R¹⁵/R¹⁶, R¹⁷/R¹⁸ und/oder R¹⁹/R²⁰ zusammen mit dem bzw. den C-Atomen, an denen sie gebunden sind einen C₄-C₈-Cycloalkyl-Rest bilden,
und 99,9 bis 0,1 Gew.-%, bezogen auf die Gesamtmenge der Monomeren, mindestens eines acyclischen Olefins der Formel X

H₂C = CH - R²¹ (X)

worin R²¹ ein Wasserstoffatom oder einen C₁-C₁₆-Alkyl- oder C₆-C₁₆-Arylrest bedeutet, gewonnen.

Die teilkristallinen Cycloolefincopolymeren entstehen jedoch nur, wenn in der Polymerisationsreaktion ein Metallocen-Katalysator der Formel Xl verwendet wird, 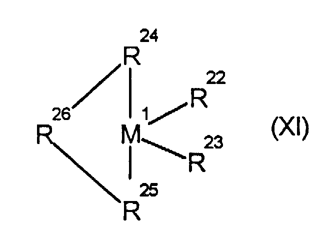 worin
- M¹: Titan, Zirkon, Hafnium, Vanadium, Niob oder Tantal ist,
- R²² und R²³: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R²⁴ und R²⁵: gleich oder verschieden sind und einen ein- oder mehrkernigen Kohlenwasserstoffrest, welcher mit dem Zentralatom M¹ eine Sandwichstruktur bilden kann, bedeuten,
- R²⁶: 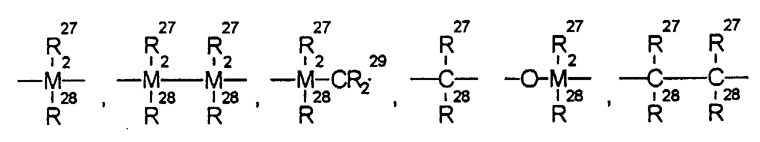 = BR²⁸, AlR²⁸, -Ge-, -Sn-, -O-. -S-. = SO, = SO₂, = NR²⁸, = CO, = PR²⁸ oder = P(O)R²⁸ ist, wobei
R²⁷, R²⁸ und R²⁹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₆-C₄₀-Arylalkenylgruppe oder eine C₇-C₄₀-Alkylarylgruppe bedeuten oder R²⁸ und R²⁹ oder R²⁸ und R²⁹ jeweils mit den sie verbinden-den Atomen einen Ring bilden, und
M² Silizium, Germanium oder Zinn ist,
wobei der Teil des Metallocenmoleküls, der durch M¹ und die Substituenten R²⁴ und R²⁵ gebildet wird, C₁-Symmetrie aufweist oder, falls R²⁴ und R²⁵ gleich sind, in der meso-Form vorliegt.

Es hat sich als zweckmäßig erwiesen, die Polymerisation in Anwesenheit eines Cokatalysators durchzuführen, welcher z.B. aus einem Aluminoxan der Formel XII 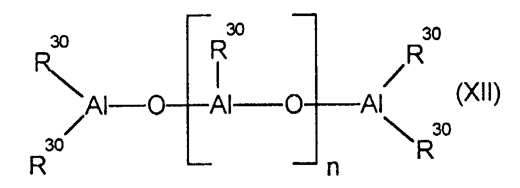 für den linearen Typ und/oder der Formel XIII 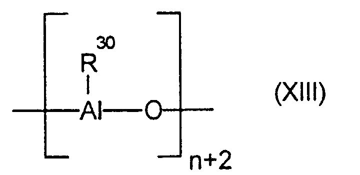 für den cyclischen Typ besteht, wobei in den Formeln XII und XIII die Reste
- R³⁰: gleich oder verschieden sind und eine C₁-C₆-Akygruppe oder Phenyl oder Benzyl bedeuten und
- n: eine ganze Zahl von 0 bis 50 ist.

Bevorzugt wird im flüssigen Cycloolefinmonomer in konzentrierten Lösungen polymerisiert, wobei es sich um Suspensionen oder Lösungen handelt.

Bei der Polymerisationsreaktion wird mindestens ein polycyclisches Olefin der Formel I, II, III, IV, V, VI, VII, VIII oder IX, vorzugsweise ein Cycloolefin der Formel I oder III, worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, polymerisiert.

Als Comonomer wird ein acyclisches Olefin der Formel X eingesetzt, worin R¹⁸, R¹⁹, R²⁰ und R²¹ gleich oder verschieden sind und ein Wasserstoffatom oder einen C₁-C₈-Alkylrest bedeuten. Bevorzugt sind Ethylen oder Propylen.

Insbesondere werden bevorzugt Copolymere von symmetrischen polycyclischen Olefinen, vorzugsweise der Formeln I und III, mit den acyclischen Olefinen X hergestellt. Unter symmetrischen polycyclischen Olefinen werden insbesondere solche Verbindungen der Formeln I und III verstanden, in denen die Substituenten R¹ und R² chemisch und in ihrer räumlichen Anordnung identisch sind.

Besonders bevorzugte Cycloolefine sind Norbornen und Tetracyclododecen. Sie werden vorzugsweise mit Ethylen copolymerisiert; besondere Bedeutung besitzen Ethylen/Norbornen-Copolymere.

Bevorzugte Einbauverhältnisse der Comonomeren I bis VI zu den Comonomeren X in das Copolymer liegen zwischen 45:55 und 55:45 Mol-%. Insbesondere werden Einbauverhältnisse von ca. 50:50 Mol-% bevorzugt.

Das polycyclische Olefin (I bis IX) wird in einer Menge von 0,1 bis 99,9 Gew.-%, jeweils bezogen auf die Gesamtmenge der Monomeren, eingesetzt.

Werden Diene der Formeln VII, VIII und/oder IX und/oder Monomere der Formeln I bis VI, die mindestens eine weitere Doppelbindung in einem ihrer Reste aufweisen, eingesetzt, so beträgt deren Einbauverhältnis im Polymer vorzugsweise >0 bis 5 Mol-%.

Die Konzentration des offenkettigen Olefins ergibt sich aus der Löslichkeit des offenkettigen Olefins in dem Reaktionsmedium bei gegebenem Druck und gegebener Temperatur.

Geeignete Primärkatalysatoren vom Übergangsmetalltyp bestehen aus einem Metallocen der Formel Xl

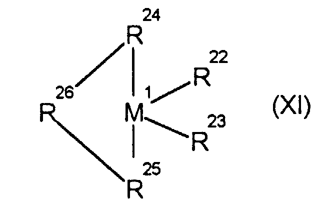

In Formel XI ist M¹ aus der Gruppe Titan, Zirkonium, Hafnium, Vanadium, Niob und Tantal, vorzugsweise Zirkonium und Hafnium. Besonders bevorzugt wird Zirkonium verwendet. Als Cokatalysator ist zum Beispiel Aluminoxan geeignet.

R²² und R²³ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

Bevorzugt ist R²⁴ Fluorenyl, Indenyl oder Cyclopentadienyl und R²⁵ Indenyl oder Cyclopentadienyl, wobei diese Reste substituiert sein können und C₁-Symmetrie vorliegt, oder beide Reste sind gleich und bedeuten gegebenenfalls substituiertes Indenyl oder substituiertes Cyclopentadienyl (meso-Form).

R²⁶ ist eine ein- oder mehrgliedrige Brücke, welche die Reste R²⁴ und R²⁵ verknüpft und bedeutet vorzugsweise 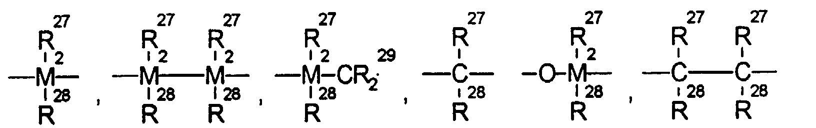 = BR²⁷ = AlR²⁷, -Ge-, -Sn-, -O-, -S-, = SO, = SO₂ = NR²⁷, = CO, = PR²⁷ oder = P(O)R²⁷, wobei R²⁷, R²⁸ und R²⁹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀ -Arylalkenylgruppe oder eine C₇-C₄₀-Alkylarylgruppe bedeuten, oder R²⁷ und R²⁸ oder R²⁷ und R²⁹ bilden jeweils zusammen mit den sie verbindenden Atomen einen C₄-C₆-Alkylring. M² ist bevorzugt Si.

Bevorzugt ist R²⁶ ein Rest 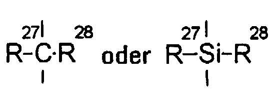 und besonders bevorzugt 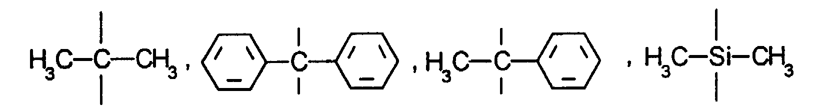 und

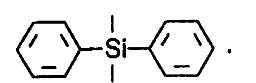

Von den Metallocenen Xl, welche in dem Teil des Moleküls, der durch das Zentralatom M¹ und die Substituenten R²⁴-R²⁵ gebildet wird, C₁-Symmetrie aufweisen (d.h. dieser Molekülteil weist keinerlei höhere Symmetrieelemente auf und ist nur durch eine Drehung um 360° - einzählige Achse - mit sich selbst zur Deckung zu bringen), sind besonders zu nennen:
Isopropylen-(9-fluorenyl)(1-(3-isopropyl)cyclopentadienyl)-zirkondichlorid, Isopropylen-(9-fluorenyl)(1-(3-methyl)cyclopentadienyl)-zirkondichlorid, Diphenylmethylen-(9-fluorenyl)(1-(3-methyl)cyclopentadienyl)-zirkondichlorid, Methylphenylmethylen-(9-fluorenyl)(1-(3-methyl)cyclopentadienyl)-zirkondichlorid, Dimethylsilyl-(9-fluorenyl)(1-(3-methyl)cyclopentadienyl)-zirkondichlorid, Diphenylsilyl-(9-fluorenyl)(1-(3-methyl)cyclopentadienyl)-zirkondichlorid, Diphenylmethylen-(9-fluorenyl)(1-(3-tert.-butyl)cyclopentadienyl)-zirkondichlorid und Isopropylen-(9-fluorenyl)(1-(3-tert.-butyl)cyclopentadienyl)-zirkondichlorid und die entsprechenden Hafniumdichloride.

Zur Bedeutung des Begriffs C₁-Symmetrie vgl. K. Mislow "Einführung in die Stereochemie", Verlag Chemie, 1. Auflage 1967, S. 23 f.

Allgemein bevorzugt sind Ligandensysteme (R²⁴ - R²⁶), die eine unterschiedliche sterische Wechselwirkung auf die Liganden R²² und R²³ ausüben können. Die Natur der Liganden R²² und R²³ ist dabei ohne Bedeutung.

Eine weitere mögliche Ausgestaltung des Polymerisationsverfahrens besteht darin, daß man an Stelle oder neben eines Aluminoxans eine salzartige Verbindung z.B. der Formel RₓNH₄₋ₓBR'₄ oder der Formel R₃PHBR'₄ als Cokatalysator verwendet. Dabei sind x = 1, 2 oder 3, R = C₁-C₆-Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen, Toluol, Chlorbenzol, o-Dichlorbenzol oder Chlornaphthalin.

Die Metallocenverbindung wird in einer Konzentration, bezogen auf das Übergangsmetall, von 10⁻³ bis 10⁻⁸, vorzugsweise 10⁻⁴ bis 10⁻⁷ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2·10⁻² mol pro dm³ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 45 und 55 Mol-% der cyclischen Komponenten und besonders bevorzugt werden Einbauraten von ca. 50 Mol-% der cyclischen Komponenten.

Die mittlere Molmasse des gebildeten Copolymers läßt sich durch Wasserstoff-Dosierung oder Variation der Temperatur in bekannter Weise steuern.

Die Polydispersität M_{w}/Mₙ der Copolymeren ist mit Werten zwischen 2,0 - 3,5 recht eng. Dadurch resultiert ein Eigenschaftbild der Polymerisate, das diese - nach spezieller Aufbereitung - für die Folienherstellung durch Extrusion besonders geeignet macht.

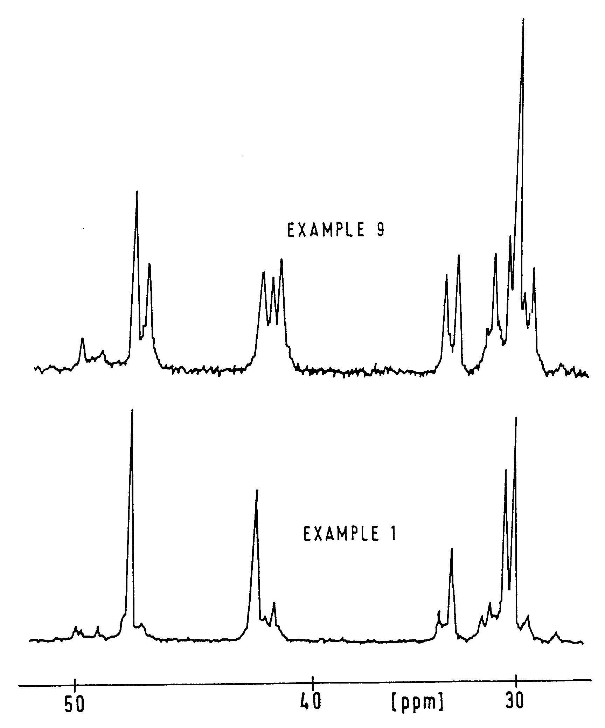

Es wurde anhand von NMR-Spektren festgestellt, daß sich diese Cycloolefincopolymere auch in ihrer Mikrostruktur deutlich von denen unterscheiden, die mit herkömmlichen Metallocenkatalysatoren hergestellt worden sind (vgl. Fig. 1). Dieser Unterschied könnte darauf beruhen, daß die hier benutzten Metallocenkatalysatoren aufgrund ihrer speziellen Symmetrie alternierend polymerisieren. Es ist anzunehmen, daß die so hergestellten Cycloolefincopolymere taktische, alternierende Cycloolefin-Olefin-Sequenzen enthalten, die eine strukturelle Differenzierung nach NMR ermöglichen (vgl. Figur 1).

Um die geforderten Folieneigenschaften zu erhalten, sollten die gewonnenen - Cycloolefincopolymere quasi frei von Katalysator- und Lösungsmittelresten sein. Das in der EP-A 503 422 beschriebene Reinigungsverfahren reicht nicht aus, um daraus Folien mit den oben beschriebenen geforderten Eigenschaften herzustellen. Erst wenn der Restkatalysatorgehalt unter 100 ppm sinkt, ist es möglich Folien mit den geforderten Eigenschaften zu erzielen. Unter Katalysatorresten werden insbesondere die aluminiumhaltigen Cokatalysatoren verstanden, da diese in erheblich höherer Konzentration im Polymeren vorhanden sind. Ist der Aluminiumgehalt auf unter 100, vorzugsweise unter 10, insbesondere unter 1 ppm gesunken, so ist davon auszugehen, daß der Gehalt an Metallocenkatalysatoren noch geringer ist und somit nicht mehr kritisch ist. Gleichfalls sollte darauf geachtet werden, daß keine chlorhaltigen Lösungsmittel wie Salzsäure bei der Aufbereitung der Polymere verwendet werden. Überreste solcher chlorhaltigen Lösungsmittel können zu unerwünschten Braunfärbungen der Folien führen.

Es hat sich als zweckmäßig erwiesen, die rohen Cycloolefincopolymere in einem Lösungsmittel bevorzugt in Anwesenheit eines Filterhilfsmittels aufzulösen und bei erhöhter Temperatur zu filtrieren. Nachdem die Polymere auf diese Weise von Katalysatorresten befreit sind, werden sie aus der Lösung wieder ausgefällt. Als Lösungsmittel kommen unpolare, gegebenenfalls halogenierte Kohlenwasserstoffe, insbesondere aromatische, aliphatische und cycloaliphatische Kohlenwasserstoffe wie Decalin, Tetralin, Chlornaphthalin oder o-Dichlorbenzol in Frage. Bevorzugt sind solche mit einem hohen Siedepunkt, insbesondere >100°C bis ca. 300°C. Als geeignete Filterhilfsmittel haben sich polare feste Stoffe erwiesen, die unter den Prozessbedingungen unlöslich sind. Beispiele hierfür sind Kieselgur, hergestellt aus Diatomeen-Ablagerungen (z.B.: Celite 545, LuV, Hamburg), Perlite, hergestellt aus obsidianähnlichem Material vulkanischen Ursprungs (z.B.: Celite Perlite 1-100) oder modifizierte Cellulose (z.B.: Diacel). Ebenfalls geeignet, wenn auch nicht bevorzugt sind poröser Kohlenstoff und absorptive Asbestfasern. Während des Filtriervorgangs sollte die Temperatur auf mindestens 100°C, bevorzugt mindestens 135°C bis maximal 300°C, besonders bevorzugt 150-170°C gehalten werden. Das gelöste, filtrierte Polymer kann dann schließlich mittels eines polaren Lösungsmittels wie Aceton ausgefällt werden.

Die Folien können durch verschiedene Verfahren hergestellt werden. Gießen aus Lösung ist möglich, aber die thermoplastische Verarbeitung ist in der Regel vorteilhafter. Plattenpressen eignet sich gut für Versuche, jedoch sind kontinuierliche Verfahren wie Extrusion oder Kalandrieren für die industrielle Herstellung wirtschaftlicher.

Extrudierte Folien können als Schlauch oder Flachfolie geformt werden. Zur Herstellung von mehrschichtigen Folien empfiehlt sich die Coextrusion.

Häufig werden die Folien zur weiteren Verbesserung der mechanischen Eigenschaften orientiert. Dies erfolgt durch Streckung. Die Strecktemperaturen sollten zweckmäßigerweise in einem Temperaturintervall von 40°C unter der Glastemperatur (T_{g}-40°C) bis maximal zur Schmelztemperatur Tₘ liegen. Die Orientierung kann uniaxial oder biaxial erfolgen.

Für die industrielle Fertigung eignen sich Strecktemperaturen oberhalb T_{g}, weil dies wegen der höheren erzielbaren Streckgeschwindigkeiten eine schnellere Fertigung erlaubt. Temperatur, Streckrate und Streckverhältnisse müssen so aufeinander abgestimmt sein, daß die Folie nicht reißt. Die Streckgeschwindigkeit beträgt bevorzugt 1 - 500000 %/Min.. Die Streckverhältnisse in Längs- und Querrichtung betragen jeweils 1,1:1 - 10:1, vorzugsweise 1,5:1 - 4:1. Das Flächenstreckverhältnis sollte vorzugsweise 3-20 betragen.

Bei biaxialer Orientierung kann die Streckung simultan oder sequentiell durchgeführt werden. Bei Flachfolien sind Tenterverfahren geeignet, aber auch Simultanstreckrahmen. Schlauchfolien werden durch Aufblasen bei gleichzeitigem Abzug biaxial orientiert.

Ein Vorteil der teilkristallinen Cycloolefincopolymer-Folien gegenüber den amorphen Folien ist ihre bessere Verstreckbarkeit. Amorphe Polymere relaxieren sehr schnell bei einer Streckung über der Glastemperatur T_{g}, wenn die zur Streckung benötigte Wärme nicht schnell genug abgeführt wird. Durch den Relaxationsprozeß geht dann ein Teil der Orientierung, die durch den Streckprozeß hereingebracht wurde, wieder verloren. Ein Verlust an Orientierung reduziert u.a. die mechanische Festigkeit, Steifigkeit, Zähigkeit, Härte und Transparenz.

Bei den teilkristallinen Cycloolefincopolymeren geschieht die Relaxation langsamer, so daß der Streckprozeß inklusive Abkühlung der Folie unkritischer als bei amorphen Cycloolefincopolymeren ist.

Ein weiterer Vorteil einer Folie aus einem teilkristallinen Cycloolefincopolymer gegenüber einer solchen aus einem amorphen liegt in der Möglichkeit, die Kristallinität der Folie nach dem Streckprozeß in einem Temperofen zu erhöhen. Man erreicht damit eine Fixierung der Folie, die sich in verbessertem mechanischen, chemischen und thermischen Verhalten äußert. Die Dauergebrauchstemperatur (T_{d}) der Folie kann sich auch die Fixierung erhöhen; Spannungen werden abgebaut. Die Dimensionsstabilität und die Barriereeigenschaften werden verbessert.

Es ist auch möglich, durch schnelles Abkühlen des Extrudates, bestehend aus einem kristallierfähigen Cycloolefincopolymer eine wenig kristalline bzw. amorphe Vorfolie herzustellen, die anschließend mit den oben beschriebenen Verfahren mono- oder biaxial gestreckt wird. In einem Temperschritt wird nach dem Streckvorgang die Folie zur Eigenschaftsverbesserung durchkristallisiert.

Die Oberflächen der Folien können zur Erzielung von z.B. Haftvermittlung oder Bedruckbarkeit oder Antistatik oder Antihaft-Eigenschaften modifiziert werden. Diese Modifizierung kann entweder durch Behandlungsmethoden wie Corona-, Flamm-, Plasma- oder Oxidationsbehandlung erfolgen oder auch durch die Aufbringung einer Beschichtung aus Lösung oder Dispersion.

In einer bevorzugten Ausführung enthält die Folie feine inerte Partikel, die das Schlupf- und Wickelverhalten verbessern. Solche Partikel, die in Mengen von 0-1% enthalten sein können sind beispielsweise:
SiO₂, Al₂O₃, Silikate mit einem SiO₂-Anteil von mindestens 30 Gew.-%, amorphe und kristalline Tonminerale, Alumosilikate, Oxide von Mg, Zn, Zr und Ti, Sulfate von Ca, Mg und Ba, Phosphate von Li, Na und Ca (inclusive der Monohydrogensalze und Dihydrogensalze), Benzoate von Li, Na und K, Terephthalate von Ca,Ba, Zn und Mn, Titanate von Mg, Ca, Ba, Zn, Cd, Pb, Sr, Mn, Fe, Co und Ni, Chromate von Ba und Pb, Kohlenstoff (z.B. Ruß oder Graphit), Glas (Glaspulver und Glaskugeln), Carbonate von Ca und Mg, Flußspat, Sulfide von Zn und Mo, organische Polymersubstanzen wie Polytetrafluorethylenpolyethylen, Talkum, Lithiumfluorid, und die Ca-, Ba-, Zn- und Mn-Salze von organischen Säuren.

Die Folie kann auch geeignete Additive wie z.B. Stabilisatoren, Gleitmittel oder Antioxidantien enthalten. Prinzipiell sind Additive, die für Polyolefine wie Polyethylen oder Polypropylen verwendet werden, auch für die Cycloolefincopolymerfolien geeignet. Als UV-Stabilisatoren können beispielsweise Absorber wie Hydroxyphenylbenzotriazole, Hydroxybenzophenone, Formamidin oder Benzyliden-Campher, Quencher wie Zimtsäureester oder Nickel-Chelate, Radikalfänger wie sterisch gehinderte Phenole, Hydroperoxidzersetzer wie Nickel- oder Zink-Komplexe schwefelhaltiger Verbindungen oder Lichtstabilisatoren vom HALS-Typ, sowie deren Gemische eingesetzt werden. Als Gleitmittel können beispielsweise verwendet werden: Fettsäuren sowie deren Ester, Amide und Salze, Silikone oder Wachse wie PP- oder PE-Wachse. Als Antioxidantien können beispielsweise zugesetzt werden Radikalfänger wie substituierte Phenole und aromatische Amine und/oder Peroxidzersetzer wie Phosphite, Phosphonate und Thioverbindungen.

Die erfindungsgemäße Folie kann ein- oder mehrschichtig sein. Mindestens eine Schicht besteht überwiegend, d.h. zu mindestens 85 Gew.-%, bevorzugt zu 90-100 Gew.-%, aus den oben beschriebenen Cycloolefincopolymeren. Eine bevorzugte Ausführung ist die Monofolie.

In einer anderen bevorzugten Ausführung trägt die erfindungsgemäße Hauptschicht eine oder zwei dünne Polymerdeckschichten mit niedrigeren Erweichungstemperaturen als die Hauptschicht. Ist die dünne Polymerdeckschicht teilkristallin, dann sollte ihre Schmelztemperatur Tₘ vorzugsweise mindestens 20°C unterhalb Tₘ der Hauptschicht liegen. Im Falle einer dünnen amorphen Deckschicht sollte deren Glastemperatur T_{g} um vorzugsweise mindestens 20°C unterhalb Tₘ der Hauptschicht liegen.

Zur Eigenschaftsmodifizierung kann die Folie beschichtet sein.

Die erfindungsgemäße Folie kann zur Eigenschaftsverbesserung andere kompatible oder nicht kompatible Polymere enthalten. Diese Polymere können separate Schichten bilden oder mit dem Cycloolefincopolymeren vermischt sein. Beispiele für solche Polymere sind: Polyethylen, Polypropylen, Polymethylbuten-1, Poly(4-methylpenten-1), Polybuten-1 und Polystyrol, Polyvinylchlorid, Polyvinylidenchlorid, Polyvinylfluorid, Polytetrafluoroethylen, Polychloropren, Polyacrylat, Polymethacrylat, Polyacrylamid, Polyacrylnitril, Acrylnitril/Butadien/Styrol-Copolymere, Acrylnitril/Styrol-Copolymere und Acrylnitril/Styrol/Acrylat-Copolymere, Polyvinylalkohol, Polyvinylacetat, Polyvinylstearat, Polyvinylbenzoat, Polyvinylmaleat, Polyvinylbutyral, Polyallylphthalat, Polyallylmelamin, Copolymere aus den o.g. Monomeren wie Ethylen/Vinylacetat-Copolymer, Polyethylenoxid und Polymere aus Bis-Glycidylether, Polyoxymethylen, Polyoxyethylen und Polyoxymethylen/Ethylenoxid-Copolymere, Polyphenyloxidpolymere, Polycarbonate, Polysulfone, Polyurethane, Nylon 6, Nylon 66, Nylon 11 und Nylon 12, Polyethylenterephthalat, Polybutylenterephthalat und Poly-1,4-dimethylolcyclohexanterephthalat, Polyethylennaphthalat (PEN), Polyethylennaphthalatbibenzoat (PENBB), Phenolformaldehydharze und Melaminformaldehydharze, Cellulose, Cellulosepropionate und Celluloseether sowie Proteine.

Die erfindungsgemäßen Folien haben Glasumwandlungstemperaturen T_{g} von 100 °C ≤ T_{g} ≤ 250 °C und Schmelztemperaturen Tₘ von 200 °C ≤ Tₘ ≤ 500 °C. Ihre Dauergebrauchstemperaturen T_{D} betragen T_{g} < T_{D} < Tₘ.

Die nach DIN 53 455 bestimmten Zug-E-Moduli E der erfindungsgemäßen Folien betragen 1,5 GPa ≤ E ≤ 8 GPa, vorzugsweise 2 GPa ≤ E ≤ 5 GPa. Die Reißfestigkeit σ_{R} beträgt 20 MPa ≤ σ_{R} ≤ 400 MPa, vorzugsweise 30 MPa ≤ σ_{R} ≤ 150 MPa. Die Reißdehnung ε_{R} beträgt 1 % ≤ ε_{R} ≤ 100 %, vorzugsweise 1 % ≤ ε_{R} ≤ 60 %.

Die Wasseraufnahme liegt unter 0,1 %, insbesondere zwischen 0 bis 0,05 %. Ein besonderer Vorteil der teilkristallinen Cycloolefin-Copolymer-Folien gegenüber den amorphen ist deren ausgezeichnete Lösungsmittelbeständigkeit, insbesondere auch gegenüber aliphatischen, cycloaliphatischen und aromatischen Kohlenwasserstoffen. Die Folie kann verwendet werden als Kondensatorfolie, Elektroisolierfolie, Trennfolie, Reprofolie, Klebebandfolie, Folie zur Herstellung von Folientastaturen, Folienschaltern und als Verpackungsfolie oder als Substrat für Flüssigkristallanzeigen.

Im Folgenden ist die Erfindung anhand von Beispielen näher erläutert.

### Beispiele

In den nachfolgenden Beispielen werden folgenden Untersuchungsmethoden verwendet.

Die Glastemperatur (T_{g}) wurde als sprunghafter Anstieg der Wärmekapazität im DSC-Diagramm bestimmt. Die DSC-Diagramme wurden mit einem Perkin-Elmer DSC 7 aufgenommen.

Die Viskositätszahl (VZ) wurde entsprechend DIN 53 728 in Dekalin bei 135°C bestimmt.

Die mechanischen Eigenschaften der Folien wurden gemäß DIN 53 455 mit einer Zugprüfmaschine 1445 der Fa. Zwick an 15 mm breiten Proben einer Einspannlänge von 100 mm untersucht. Der Zug-E-Modul wurde im Dehnungsbereich von 0,3 bis 0,5 % bei einer Dehnungsgeschwindigkeit von 10 mm/min bestimmt. Die Reißfestigkeit und -dehnung wurden bei 100 mm/min bestimmt.

Die Kugeldruckhärte wurde nach ISO 2039, Teil 1 (30s-Wert) bestimmt.

Für die Bestimmung der Dichte wurde eine Dichtegradientensäule verwendet.

Der Restkatalysatorgehalt wurde durch Röntgenfluoreszenzmessung be stimmt.

### Beispiel 1

Ein 75-dm³-Reaktor wurde mit Ethylen gefüllt und mit 15 dm³ Norbornen und 15 dm³ Decalin gefüllt. Durch mehrfaches Ausdrücken von Ethylen (6 bar) wurde die Lösung mit Ethylen gesättigt. Es wurde ein Druck von 2,5 bar (Überdruck) eingestellt. 500 cm³ toluolische Methylaluminoxanlösung (10,1 Gew.-% Methylaluminoxan der Molmasse 1300 g/mol nach kryoskopischer Bestimmung) in den Reaktor gegeben und 15 min bei 70 °C gerührt. Eine Lösung von 150 mg Isopropylen-(9-fluorenyl)(1-(3-methyl-cyclopentadienyl)-zirkondichlorid in 500 cm³ toluolischer Methylaluminoxanlösung wurde nach 15 minütiger Voraktivierung zugegeben. (Zur Molekulargewichtsregelung kann Wasserstoff vor der Katalysatorzugabe zudosiert werden.)

Unter Rühren (750 UPM) wurde bei 70 °C polymerisiert, wobei der Ethylendruck durch Nachdosieren bei 2,5 bar gehalten wurde.

In einen zweiten Rührkessel (150 dm³) wurden 50 l Decalin gefüllt und darin 500 g Diatomeenerde (Celite®, LuV Hamburg) suspendiert. In der Mischung wurden 200 ml Wasser dispergiert. Das Wasser wurde dabei von der Diatomeenerde absorbiert. Der Suspension wurde 0,5 g Antioxidans (Hostanox SE 10) und 0,5 g Peroxidzersetzer (Hostanox 03) zugesetzt und auf 90 °C temperiert.

Nach 60 min Reaktionszeit wurde die Reaktionslösung schnell in den zweiten Rührkessel abgelassen. Unter Rühren wurde auf 170 °C erhitzt. Dabei wurden ca. 2 bar Druck erreicht.

Auf dem Filtergewebe einer 120 l Drucknutsche wurde ein Filterkuchen aus 500 g Celite, suspendiert in 10 l einer hydrierten Dieselölfraktion, aufgebaut und die Nutsche anschließend auf 160 °C temperiert.

Die Polymerlösung wurde über die Drucknutsche filtriert. Dabei wurde so verfahren, daß das Filtrat zunächst 15 min in die Nutsche zurückgefördert wurde (d.h. im Kreis gepumpt wurde). Über der Lösung wurde ein Druck von 2,8 bar Stickstoff aufgebaut.

Die Polymerlösung wurde anschließend mittels eines Dispergators (Ultraturrmax) in 500 l Aceton eingerührt und dabei gefällt. Die Acetonsuspension wurde über eine 680 l Rührdrucknutsche bei geöffnetem Bodenventil im Kreis gefördert. Nach Schließen des Bodenventils wurde filtriert. Der polymere Feststoff wurde dreimal mit Aceton gewaschen. Der letzten Wäsche wurden 50 g Stabilisator (Irganox 1010, Ciba) zugesetzt.

Danach wurde das Aceton vollständig abgedrückt und das Produkt bei 100 °C drei Stunden vorgetrocknet. Die Endtrocknung erfolgt 10 Stunden bei 10 mbar und 160 °C bei schwacher Stickstoffüberlagerung im Trockenschrank.

Es wurden 2100 g farbloses pulverförmiges Polymer erhalten. Die Glastemperatur (T_{g}) betrug 126 °C und die Schmelztemperatur (Tₘ) 284°C. Die Viskositätszahl wurde nach einstündigem Lösen bei 180 °C bei 135 °C mit 59 ml/g gemessen. Der Restkatalysatorgehalt betrug 18 ppm.

### Beispiele 2 bis 7

Die Polymerisationen wurden analog zu Beispiel 1 durchgeführt, wobei die Ethylenüberdrucke gemäß Tabelle 1 variiert wurden.

**Tabelle 1**

| Beispiel | Katalysator Menge/g | Ethylendruck/bar | Reaktionszeit/min | Ausbeute kg | VZ/cm³/g | Tg/°C | Tₘ/°C | Norbornen Gehalt in Mol-% | Quellgrad* in Toluol/Gew.-% |
|---|---|---|---|---|---|---|---|---|---|
| 2 | 0,5 | 0,3 | 100 | 2,1 | 35 | 141 | 239 | 54 | 54 |
| 3 | 0,5 | 0,5 | 80 | 1,9 | 43 | 137 | 260 | 53 | 39 |
| 4 | 0,25 | 1,0 | 90 | 1,7 | 47 | 133 | 275 | 52 | 0,2 |
| 5 | 0,15 | 2,0 | 60 | 1,1 | 53 | 129 | 279 | 51 | 0,2 |
| 1 | 0,15 | 2,5 | 60 | 1,4 | 59 | 126 | 284 | 50 | 0,1 |
| 6 | 0,15 | 3,5 | 60 | 1,7 | 74 | 119 | 267 | 48 | 32 |
| 7 | 0,1 | 6,0 | 40 | 1,9 | 93 | 105 | 232 | 46 | 40 |

| | | | | | | | | | |
|---|---|---|---|---|---|---|---|---|---|
| * Quellgrad: prozentuale Gewichtszunahme nach Lagerung bei Raumtemperatur über 14 Tage in Toluol | | | | | | | | | |

### Beispiel 8 (Vergleichsbeispiel)

Ein 1,5-dm³-Reaktor wurde mit Ethylen gefüllt und mit 600 cm³ einer 85-gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 2 bar (Überdruck) eingestellt. 5 cm³ toluolische Methylaluminoxanlösung (10,1 Gew.-% Methylaluminoxan der Molmasse 1300 g/mol nach kryoskopischer Bestimmung) in den Reaktor gegeben und 15 min bei 40 °C gerührt. Eine Lösung von 5 mg Isopropylen-(9-fluorenyl)(1-(3-methyl)-cyclopentadienyl)-zirkondichlord in 5 cm³ toluolischer Methylaminoxanlösung wurde nach 15-minütiger Voraktivierung zugegeben. (Zur Molekulargewichtsregelung kann Wasserstoff vor der Katalysatorzugabe zudosiert werden.)

Unter Rühren (750 UPM) wurde eine Stunde bei 40 °C polymerisiert, wobei der Ethylendruck durch Nachdosieren bei 2 bar gehalten wurde.

Die Reaktionslösung wurde in ein Gefäß abgelassen und schnell in 5 dm³ Aceton eingegossen, 10 min gerührt und anschließend filtriert.

Der erhaltene Feststoff wurde mehrfach mit 10%iger Salzsäure und Aceton im Wechsel gewaschen. Es wurde neutral gewaschen und nochmals mit Aceton gerührt. Das erneut filtrierte Polymer wurde bei 80 °C und einem Druck von 0,2 bar 15 Stunden getrocknet.

Es wurden 54 g eines farblosen Polymers erhalten. Es wurde eine Viskositätszahl (VZ) von 131 ml/g, eine Glastemperatur (T_{g}) von 133 °C und eine Schmelztemperatur (Tₘ₎ von 289 °C gemessen. Das Norbornen/Ethylen-Einbauverhältnis ist gemäß NMR-Spektrum ca. 50 Mol-% Norbornen zu 50 Mol-% Ethylen. Der Restkatalysatorgehalt betrug 315 ppm.

### Beispiel 9 (Vergleichsbeispiel)

Ein sauberer und trockener 75 dm³-Polymerisationsreaktor mit Rührer wurde mit Stickstoff und dann mit Ethylen gespült und mit 22000 g Norbornen-Schmelze bei 50 °C gefüllt. Unter Rühren wurde dann der Reaktor auf einer Temperatur von 50 °C gehalten und 15 bar Ethylen (Überdruck) aufgedrückt.

Danach wurden 580 cm³ toluolische Methylaluminoxan-Lösung (MAO-Lsg., 10,1 Gew.-% Methylaluminoxan mit Molmasse 1300 g/mol nach kryoskopischer Bestimmung) in den Reaktor dosiert und die Mischung 15 Minuten bei 50 °C gerührt, wobei durch Nachdosieren der Ethylendruck bei 15 bar gehalten wurde. Parallel dazu wurden 1000 mg Diphenylmethylen-(cyclopentadienyl)-(9-fluorenyl)-zirkondichlorid (Metallocen-Katalysator) in 1000 ml MAO-Lösung (Konzentration und Qualität wie oben) gelöst und durch 15-minütiges Stehenlassen voraktiviert. Dann wurde die Lösung des Komplexes in den Reaktor dosiert und gleich anschließend 3,5 l Wasserstoff über eine Schleuse eindosiert. (Der Wasserstoff diente zur Molekulargewichtsregulierung.) Unter Rühren (700 UPM) wurde dann 45 Minuten bei 50 °C polymerisiert, wobei der Ethylendruck durch Nachdosieren bei 15 bar gehalten wurde.

Die Aufbereitung erfolgte analog Beispiel 1. Die Filtration wurde bei 70 °C durchgeführt.

Das Produkt wurde bei 80 °C und 0,2 bar 15 Stunden getrocknet. Es wurde eine Produktmenge von 4500 g erhalten. An dem Produkt wurde eine Viskositätszahl (Vz) von 103 cm³/g und eine Glastemperatur (T_{g}) von 123 °C gemessen. Es konnte kein Schmelzpunkt nachgewiesen werden. Der Restkatalysatorgehalt betrug 2,1 ppm.

### Beispiel 10

### Herstellung einer nicht-orientierten, teilkristallinen Folie

Aus dem Polymeren, hergestellt gemäß Beispiel 1, wurden 4 mm dicke Spritzgußplatten hergestellt, die anschließend in einer Plattenpresse 15 Minuten lang bei 300 °C zu Folien der Dicke 400 µm mit den Maßen 200x200 mm gepreßt wurden.

Die Folie war glasklar und wies keine Gelbfärbung auf.

Die Eigenschaften sind in Tabelle 2 beschrieben.

### Beispiel 11 (Vergleichsbeispiel)

### Herstellung einer nicht erfindungsgemäßen, nicht-orientierten, teilkristallinen Folie

Aus Polymeren, hergestellt gemäß Beispiel 8, wurde eine Folie, wie in Beispiel 10 beschrieben, hergestellt.

Die Folie wies eine deutliche bräunlich-gelbe Färbung auf. Die Folie zeigte Gelpartikel (Stippen), die durch lokale Vernetzungen des Polymers entstanden sein dürften. Außerdem wurde eine Trübung festgestellt, die auf Katalysatorreste zurückgeführt wurde.

Die Eigenschaften sind in Tabelle 2 beschrieben.

### Beispiel 12 (Vergleichsbeispiel)

### Herstellung einer nicht-orientierten, amorphen Folie

Aus Polymeren, hergestellt gemäß Beispiel 9, wurde eine Folie, wie in Beispiel 10 beschrieben, hergestellt.

Die Folie war glasklar und wies keine Gelbfärbung auf.

Die Eigenschaften sind in Tabelle 2 beschrieben.

**Tabelle 2**

| Vergleich der Eigenschaften | | | | |
|---|---|---|---|---|
| | | Beispiel 10 | Beispiel 11 | Beispiel 12 |
| E-Modul | GPa | 4 | 3,6 | 3,2 |
| Reißfestigkeit | MPa | 60 | 54 | 46 |
| Reißdehnung | % | 3 | 3 | 3 |
| T_{g} | °C | 126 | 133 | 123 |
| Tₘ | °C | 284 | 289 | - |
| Dichte | g/cm³ | 1.032 | 1.030 | 1.018 |
| Kugeldruckhärte | N/mm² | 254 | 246 | 200 |
| Lichttransmission ¹⁾ | % | 82 | 41 | 87 |
| Trübung²⁾ | % | 5 | 12 | 3 |
| Lösungsmittelbeständigkeit³⁾ | ΔM in % | 0,1 | 0,1 | löslich |
| Toluol | | 0,1 | 0,1 | löslich |
| Cyclohexan | | 0 | 0 | !00 |
| Hexan | | 0,8 | 0,9 | zerfließt |
| Dichlormethan | | 1,1 | 1,0 | löslich |
| Chloroform | | | | |

| | | | | |
|---|---|---|---|---|
| 1) gemessen bei der Wellenlänge λ = 500 nm | | | | |
| 2) gemessen nach ASTM-D 1003-61 (Gardner) | | | | |
| 3) Die Folien wurden gewogen (M1) und anschließend in Toluol, Cyclohexan, Hexan, Chloroform und Dichlormethan bei Raumtemperatur 24 Stunden gelagert. Anschließend wurden die Folien durch kurzes Eintauchen in Pentan gewaschen. Anhaftendes Lösungsmittel verdampfte innerhalb weniger Minuten. Durch erneutes Wiegen (M2), spätestens 3 Minuten nach der Pentan-Wäsche, und Differenzbildung (M2-M1) wurde die prozentuale Masseänderung ermittelt | | | | |

Fig. 1 zeigt die ¹³C-NMR-Spektren der Polymere, die gemäß Beispiel 1 (Metallocenkatalysator mit C₁-Symmetrie in dem Teil des Metallocenmoleküls, der durch M¹ und R²⁴ und R²⁵ gebildet wird) und Beispiel 9 (herkömmlicher Metallocenkatalysator) erhalten wurden. Die Unterschiede sind deutlich zu erkennen.

## Patentansprüche

1. Ein- oder mehrschichtige unorientierte oder mono- oder biaxial orientierte Folie bei der mindestens eine Schicht ein teilkristallines Cycloolefincopolymer enthält, welches 0,1 bis 99,9 Gew.-%, bezogen auf die Gesamtmenge der Monomeren, mindestens eines Monomers der Formeln I, II, III, IV, V, VI, VII, VIII oder IX 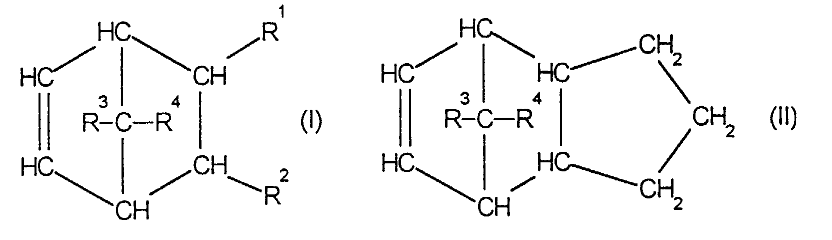 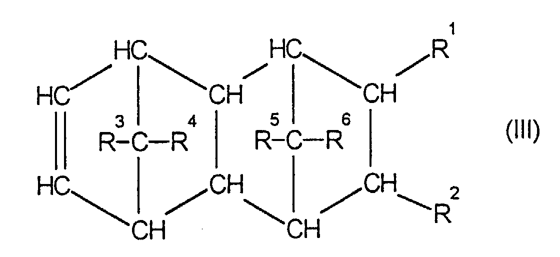 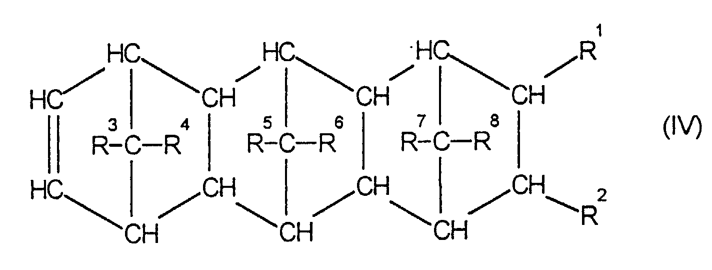 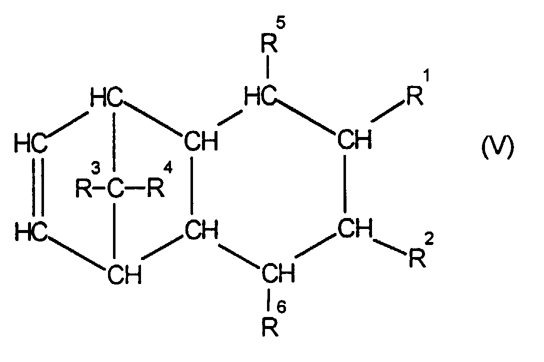 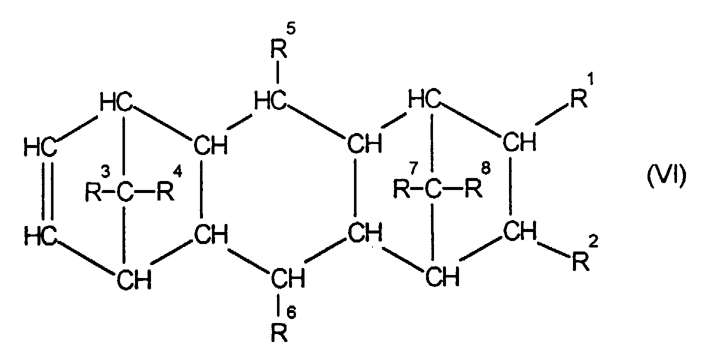 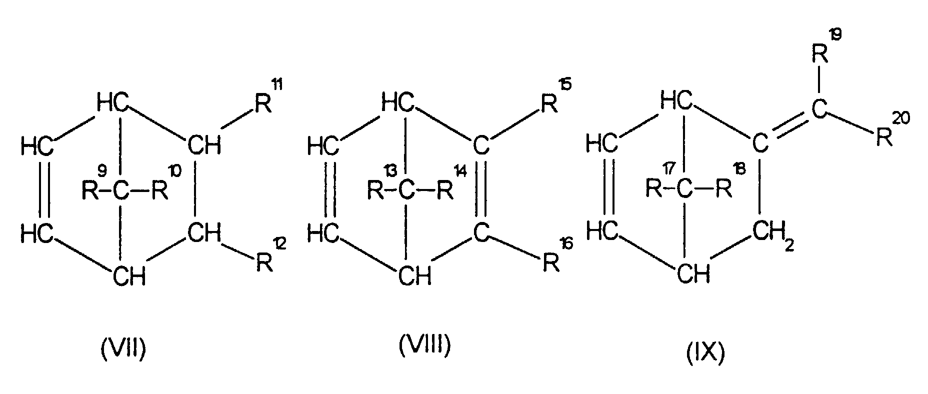 worin
R¹ bis R⁸ gleich oder verschieden sind und ein Wasserstoffatom, einen C₆-C₁₆-Aryl- oder einen C₁-C₈-Alkylrest bedeuten, wobei gleiche Reste in den verschiedenen Formeln die gleiche oder eine unterschiedliche Bedeutung haben und worin
R⁹ bis R²⁰ gleich oder verschieden sind und einen C₁-6₁₆-Alkyl-, C₂-C₁₆-Alkenyl oder C₆-C₁₆-Aryl-Rest bedeuten oder wobei die Restepaare R⁹/R¹⁰, R¹¹/R¹², R¹³/R¹⁴, R¹⁵/R¹⁶, R¹⁷/R¹⁸ und/oder R¹⁹/R²⁰ zusammen mit dem bzw. den C-Atomen, an denen sie gebunden sind einen C₄-C₈-Cycloalkyl-Rest bilden,
und 99,9 bis 0,1 Gew.-%, bezogen auf die Gesamtmenge der Monomeren, mindestens eines acyclischen Olefins der Formel X
H₂C = CH - R²¹ (X)
worin R²¹ ein Wasserstoffatom oder einen C₁-C₁₆-Alkyl- oder C₆-C₁₆-Arylrest bedeutet, enthält, dadurch gekennzeichnet, daß das Cycloolefincopolymer einen Gehalt an Katalysatorresten von <100 ppm aufweist.

2. Folie nach Anspruch 1, dadurch gekennzeichnet, daß die Glastemperatur >100 °C und die Schmelztemperatur > 200 °C ist.

3. Folie nach Anspruch 1 oder 2, dadurch gekennzeichnet, daß das cyclische Monomer der Formel I, II, III, IV, V und VI symmetrisch ist .

4. Folie nach Anspruch 1, 2 oder 3, dadurch gekennzeichnet, daß das Einbauverhältnis von Monomer der Formel I, II, III, IV, V und VI zu dem Monomer der Formel X ca. 50/50 Mol-% ist.

5. Folie nach einem oder mehreren der Ansprüche 1 bis 4, dadurch gekennzeichnet, daß das Monomer der Formel I Norbornen ist.

6. Folie nach einem oder mehreren der Ansprüche 1 bis 4, dadurch gekennzeichnet, daß das Monomer der Formel I Tetracyclododecen ist.

7. Folie nach einem oder mehreren der Ansprüche 1 bis 6, dadurch gekennzeichnet, daß das Cycloolefincopolymer durch Metallocenkatalyse hergestellt ist.

8. Folie nach einem oder mehreren der Ansprüche 1 bis 7, dadurch gekennzeichnet, daß das Cycloolefincopolymer aus Norbornen und Ethylen im Molverhältnis 50 : 50 besteht.

9. Folie nach einem oder mehreren der Ansprüche 1 bis 8, dadurch gekennzeichnet, daß sie einschichtig ist.

10. Folie nach einem oder mehreren der Ansprüche 1 bis 9, dadurch gekennzeichnet, daß sie uniaxial orientiert ist.

11. Folie nach einem oder mehreren der Ansprüche 1 bis 9, dadurch gekennzeichnet, daß sie biaxial orientiert ist.

12. Folie nach einem oder mehreren der Ansprüche 1 bis 11, dadurch gekennzeichnet, daß sie >0 bis 2 % inerte Partikel enthält.

13. Verwendung einer Folie nach einem oder mehreren der Ansprüche 1 bis 12, als Kondensatorfolie.

14. Verwendung einer Folie nach einem oder mehreren der Ansprüche 1 bis 12, als Reprofolie.

15. Verwendung einer Folie nach einem oder mehreren der Ansprüche 1 bis 12, zur Herstellung von Folientastaturen und Folienschaltern.

16. Verwendung einer Folie nach einem oder mehreren der Ansprüche 1 bis 12, als Substrat für Flüssigkristallanzeigen.

17. Verwendung einer Folie nach einem oder mehreren der Ansprüche 1 bis 12, als Verpackungsfolie.

## Claims

1. A single- or multilayer non-oriented or mono- or biaxially oriented film in which at least one layer comprises a partly crystalline cycloolefin copolymer which comprises 0.1 to 99.9% by weight, based on the total amount of monomers, of at least one monomer of the formula I, II, III, IV, V, VI, VII, VIII or IX 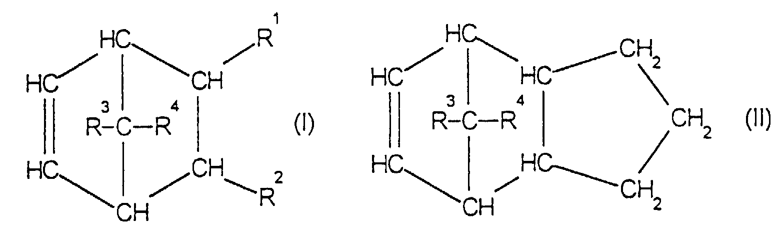 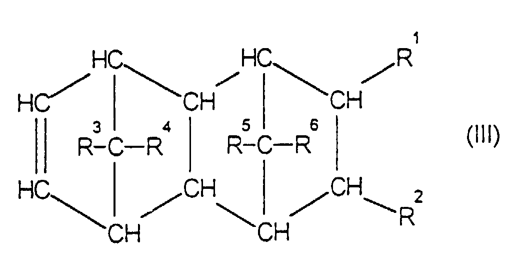 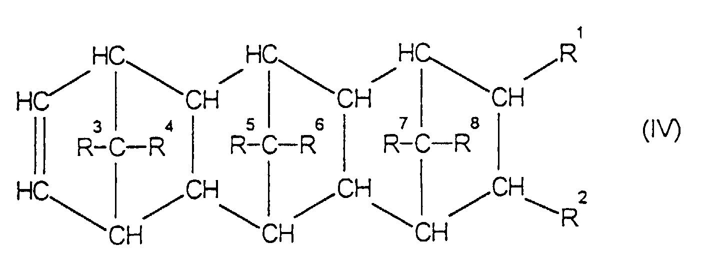 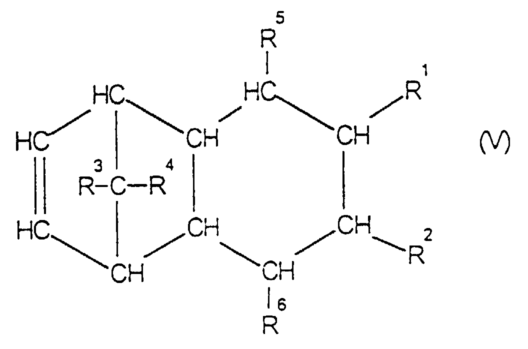 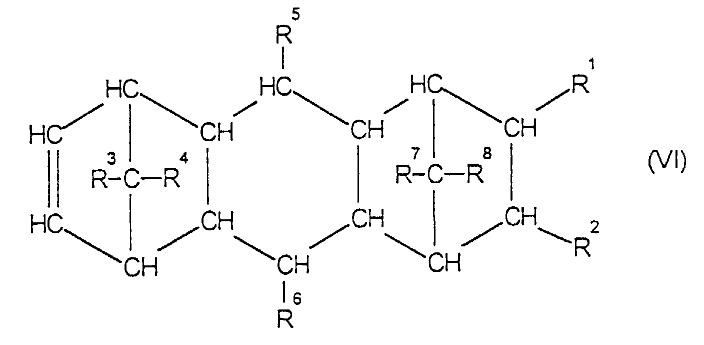 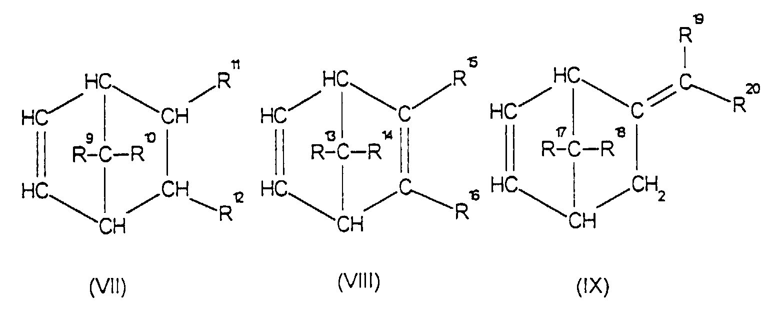 in which
R¹ to R⁸ are identical or different and are a hydrogen atom, a C₆-C₁₆-aryl or a C₁-C₈-alkyl radical, the same radicals in the various formulae having the same or a different meaning, and in which
R⁹ to R²⁰ are identical or different and are a C₁-C₁₆-alkyl, C₂-C₁₆-alkenyl or C₆-C₁₆-aryl radical, or in which the radical pairs R⁹/R¹⁰, R¹¹/R¹², R¹³/R¹⁴, R¹⁵/R¹⁶, R¹⁷/R¹⁸ and/or R¹⁹/R²⁰, together with the carbon atom or atoms to which they are bonded, form a C₄-C₈-cycloalkyl radical,
and 99.9 to 0.1% by weight, based on the total amount of monomers, of at least one acyclic olefin of the formula X
H₂C = CH - R²¹ (X)
in which R²¹ is a hydrogen atom or a C₁-C₁₆-alkyl or C₆-C₁₆-aryl radical, wherein the cycloolefin copolymer has a content of catalyst residues of <100 ppm.

2. A film as claimed in claim 1, wherein the glass transition temperature is >100°C and the melting point is >200°C.

3. A film as claimed in claim 1 or 2, wherein the cyclic monomer of the formula I, II, III, IV, V or VI is symmetric.

4. A film as claimed in claim 1, 2 or 3, wherein the incorporation ratio of monomer of the formula I, II, III, IV, V or VI to the monomer of the formula X is about 50/50 mol %.

5. A film as claimed in one or more of claims 1 to 4, wherein the monomer of the formula I is norbornene.

6. A film as claimed in one or more of claims 1 to 4, wherein the monomer of the formula I is tetracyclododecene.

7. A film as claimed in one or more of claims 1 to 6, wherein the cycloolefin copolymer is prepared by metallocene catalysis.

8. A film as claimed in one or more of claims 1 to 7, wherein the cycloolefin copolymer comprises norbornene and ethylene in a molar ratio of 50 : 50.

9. A film as claimed in one or more of claims 1 to 8, which is a single-layer film.

10. A film as claimed in one or more of claims 1 to 9, which is uniaxially oriented.

11. A film as claimed in one or more of claims 1 to 9, which is biaxially oriented.

12. A film as claimed in one or more of claims 1 to 11, which comprises >0 to 2% of inert particles.

13. The use of a film as claimed in one or more of claims 1 to 12 as a capacitor film.

14. The use of a film as claimed in one or more of claims 1 to 12 as a reproduction film.

15. The use of a film as claimed in one or more of claims 1 to 12 for the production of film keyboards and film switches.

16. The use of a film as claimed in one or more of claims 1 to 12 as a substrate for liquid crystal displays.

17. The use of a film as claimed in one or more of claims 1 to 12 as a packaging film.

## Revendications

1. Feuille monocouche ou multicouche non orientée ou orientée uniaxialement ou biaxialement, dans laquelle au moins une couche contient un copolymère de cyclooléfine semi-cristallin, qui contient 0,1 à 99,9% en poids, sur la base de la quantité totale des monomères, d'au moins un monomère de formules I, II, III, IV, V, VI, VII, VIII ou IX 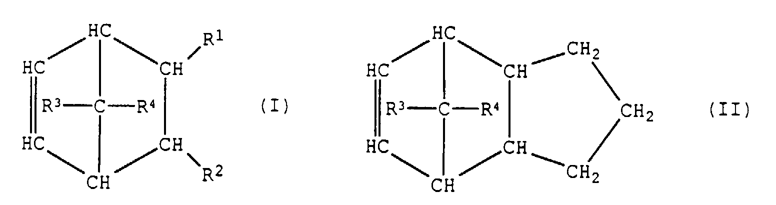 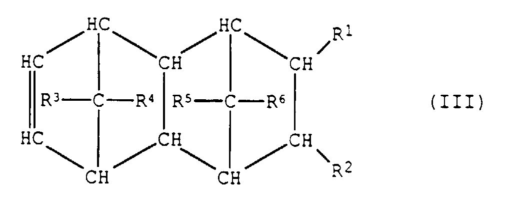 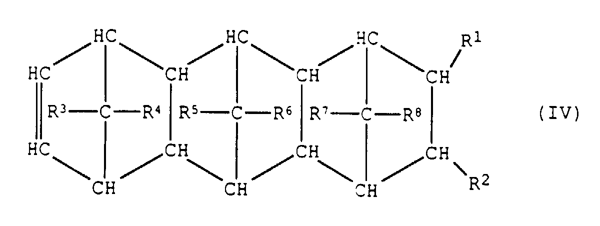 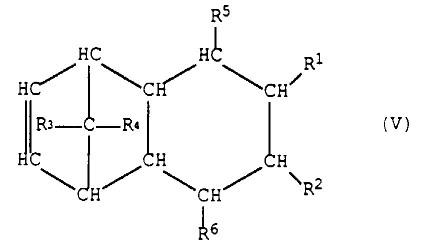 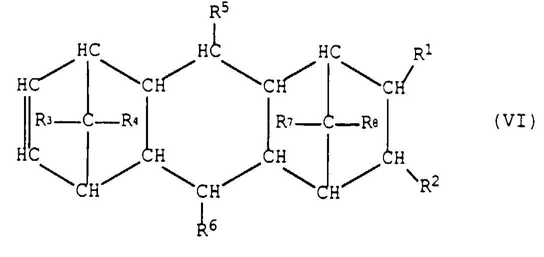 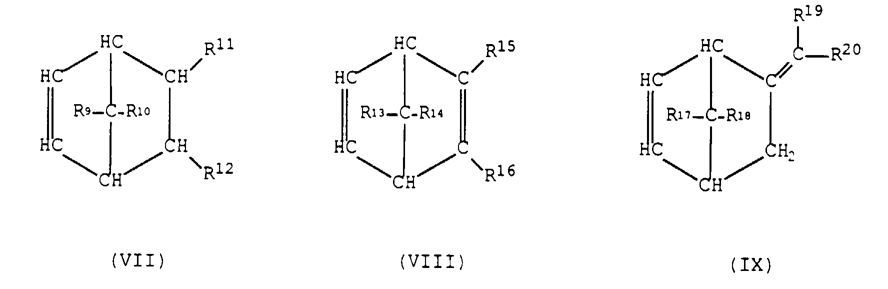 dans lesquelles
R¹ à R⁸ sont identiques ou différents et signifient un atome d'hydrogène, un radical aryle en C₆-C₁₆ ou un radical alkyle en C₁-C₈, des radicaux identiques dans les différentes formules ayant la même signification ou une signification différente, et dans lesquelles
R⁹ à R²⁰ sont identiques ou différents et signifient un radical alkyle en C₁-C₁₆, un radical alcényle en C₂-C₁₆ ou un radical aryle en C₆-C₁₆, ou dans lesquelles les paires de radicaux R⁹/R¹⁰, R¹¹/R¹², R¹³/R¹⁴, R¹⁵/R¹⁶, R¹⁷/R¹⁸ et/ou R¹⁹/R²⁰ forment avec le ou selon le cas les atomes de carbone auxquels ils sont liés un radical cycloalkyle en C₄-C₈,
et 99,9 à 0,1% en poids, sur la base de la quantité totale des monomères, d'au moins une oléfine acyclique de formule X
H₂C=CH-R²¹ (X)
dans laquelle R²¹ signifie un atome d'hydrogène ou un radical alkyle en C₁-C₁₆ ou un radical aryle en C₆-C₁₆, caractérisée en ce que le copolymère de cyclooléfine présente une teneur en résidus de catalyseur de <100 ppm.

2. Feuille suivant la revendication 1, caractérisée en ce que la température de transition vitreuse est >100°C et en ce que la température de fusion est >200°C.

3. Feuille suivant la revendication 1 ou 2, caractérisée en ce que le monomère cyclique de formule I, II, III, IV, V et VI est symétrique.

4. Feuille suivant la revendication 1, 2 ou 3, caractérisée en ce que le rapport d'incorporation du monomère de formule I, II, III, IV, V et VI dans le monomère de formule X est d'environ 50/50% en mole.

5. Feuille suivant une ou plusieurs des revendications 1 à 4, caractérisée en ce que le monomère de formule I est le norbornène.

6. Feuille suivant une ou plusieurs des revendications 1 à 4, caractérisée en ce que le monomère de formule I est le tétracyclododécène.

7. Feuille suivant une ou plusieurs des revendications 1 à 6, caractérisée en ce que le copolymère de cyclooléfine est préparé par catalyse au métallocène.

8. Feuille suivant une ou plusieurs des revendications 1 à 7, caractérisée en ce que le copolymère de cyclooléfine est composé de norbornène et d'éthylène dans le rapport molaire 50:50.

9. Feuille suivant une ou plusieurs des revendications 1 à 8, caractérisée en ce qu'elle est monocouche.

10. Feuille suivant une ou plusieurs des revendications 1 à 9, caractérisée en ce qu'elle est orientée uniaxialement.

11. Feuille suivant une ou plusieurs des revendications 1 à 9, caractérisée en ce qu'elle est orientée biaxialement.

12. Feuille suivant une ou plusieurs des revendications 1 à 11, caractérisée en ce qu'elle contient >0 à 2% de particules inertes.

13. Utilisation d'une feuille suivant une ou plusieurs des revendications 1 à 12, comme feuille pour condensateur.

14. Utilisation d'une feuille suivant une ou plusieurs des revendications 1 à 12, comme feuille pour reproduction.

15. Utilisation d'une feuille suivant une ou plusieurs des revendications 1 à 12, pour la fabrication de claviers à effleurement et d'interrupteurs à membrane.

16. Utilisation d'une feuille suivant une ou plusieurs des revendications 1 à 12, comme substrat pour affichages à cristaux liquides.

17. Utilisation d'une feuille suivant une ou plusieurs des revendications 1 à 12, comme feuille d'emballage.
